# FASCICULE DE BREVET EUROPEEN

(11) **EP 1 222 155 B1**
(45) Date de publication et mention de la délivrance du brevet: **25.03.2009**
(21) Numéro de dépôt: 00971298.5
(22) Date de dépôt: 26.09.2000
(51) Int. Cl.: C07C 17/278, C07C 19/01, B01J 31/40, C07C 17/38

(54) **PROCEDE DE PREPARATION D'UN COMPOSE ORGANIQUE ET METHODE DE RECUPERATION D'UN COCATALYSEUR**
VERFAHREN ZUR HERSTELLUNG EINER ORGANISCHEN VERBINDUNG UND VERFAHREN ZUR WIEDERGEWINNUNG EINES COKATALYSATORS
METHOD FOR PREPARING AN ORGANIC COMPOUND AND METHOD FOR RECOVERING A CO-CATALYST

(30) Priorité: 06.10.1999 EP 99203271
(43) Date de publication de la demande: 17.07.2002
(73) Titulaire: SOLVAY (Société Anonyme), 1050 Bruxelles (BE)
(72) Inventeur: CASAUBON, Lionel, F-39600 Tavaux (FR); ANCIAUX, Charles-Marie, F-31170 Saint-Usage (FR); LAMBERT, Alain, B-1320 Beauvechain (BE)
(74) Mandataire: Jacques, Philippe
(86) Numéro de dépôt international: PCT/EP2000/009494
(87) Numéro de publication internationale: WO 2001/025177

(56) Documents cités:
- EP-A- 0 207 387
- EP-A- 0 787 707
- US-A- 3 454 657
- F. A. CAREY: "Organic Chemistry"

## Description

La présente invention concerne un procédé de préparation d'un composé organique et une méthode pour la récupération d'un cocatalyseur d'une phase aqueuse.

En synthèse industrielle de composés chimiques, on fait souvent appel à des techniques catalytiques. Les systèmes catalytiques sont souvent composés d'un catalyseur, qui comprend habituellement au moins un métal, et d'un cocatalyseur qui est souvent un composé organique capable d'interagir avec le catalyseur en vue d'améliorer sa performance. Notamment dans des procédés à catalyse homogène, dans lesquels le système catalytique est dissous dans le milieu réactionnel, on trouve des quantités considérables de cocatalyseur et de catalyseur dans le mélange de composés issu de la réaction. Une façon de séparer le système catalytique des produits de la réaction consiste à effectuer un lavage du mélange de composés issu de la réaction avec un milieu aqueux approprié. De la sorte, on obtient une phase aqueuse contenant la majeure partie du catalyseur et du cocatalyseur.

Le cocatalyseur est souvent un composé coûteux. Eventuellement, il est également toxique ou susceptible de nuire à l'environnement.

Il est souhaitable de disposer de méthodes qui permettent de récupérer le cocatalyseur d'une phase aqueuse avec un rendement élevé et permettant un rejet facile de la phase aqueuse résiduaire vers l'environnement.

L'invention concerne dès lors une méthode pour la récupération d'un cocatalyseur d'une phase aqueuse contenant au moins du cocatalyseur, comprenant
(a) une étape de traitement de la phase aqueuse avec au moins une base, de préférence à une température supérieure à la température ambiante;
(b) une étape de séparation du cocatalyseur dans laquelle on isole le cocatalyseur de la phase aqueuse traitée avec la base.

La phase aqueuse traitée est le plus souvent obtenue par mise en contact d'un mélange réactionnel, comprenant le cocatalyseur à récupérer, avec un milieu aqueux, comprenant de préférence un acide, avantageusement de l'acide chlorhydrique.

L'invention concerne dès lors également un procédé de préparation d'un composé organique comprenant au moins
(a) une étape de synthèse du composé organique, dans laquelle on fait réagir des réactifs dans un milieu réactionnel contenant un catalyseur et un cocatalyseur;
(b) une étape de lavage du mélange réactionnel issu de l'étape (a), dans laquelle on met en contact ledit mélange réactionnel avec un milieu aqueux et on sépare les phases organique et aqueuse obtenues;
(c) une étape de traitement de la phase aqueuse avec au moins une base; et
(d) une étape de séparation du cocatalyseur dans laquelle on isole le cocatalyseur de la phase aqueuse traitée avec la base.

La méthode et le procédé selon l'invention permettent de récupérer le cocatalyseur avec un rendement et une pureté élevés. Ainsi le cocatalyseur récupéré peut être réutilisé dans une réaction de préparation de composé organique en présence d'un catalyseur et d'un cocatalyseur sans qu'une épuration supplémentaire préalable ne soit indispensable.

La phase aqueuse débarrassée du cocatalyseur peut, éventuellement après séparation du catalyseur ou des produits résultant de l'action de la base sur le catalyseur, être rejetée facilement vers l'environnement dès lors que sa teneur en composés susceptibles de nuire à l'environnement est conforme aux normes légales.

La base utilisée pour traiter la phase aqueuse est généralement une base inorganique. L'hydroxyde de sodium, éventuellement sous la forme d'une solution aqueuse, ou une solution aqueuse d'ammoniac conviennent bien. Lorsque le catalyseur contient un ou plusieurs composés métalliques formant en milieu basique des hydroxydes essentiellement insolubles dans l'eau, on met généralement en oeuvre une quantité de base appropriée pour précipiter ces composés sous la forme de leurs hydroxydes.

De préférence, pendant l'étape de traitement basique, on chauffe la phase aqueuse à une température de 30 à 100 °C, de préférence de 40 à 80 °C.

Le pH final de la phase aqueuse ayant subi le traitement basique est généralement d'au moins 3,5, plus souvent d'au moins 4. Il est généralement d'au plus 13. Plus souvent, il est d'au plus 12. De préférence, il est d'au plus environ 11.

Le traitement basique peut être effectué préalablement à l'étape de séparation du cocatalyseur. Dans une variante avantageuse, on effectue l'étape de traitement basique et l'étape de séparation du cocatalyseur au moins partiellement simultanément. Pour isoler au moins une partie du cocatalyseur dans l'étape de séparation du cocatalyseur, on utilise comme des opérations de séparation une opération d'entraînement à la vapeur ou une opération de distillation, éventuellement sous pression réduite.

Le milieu aqueux mis en oeuvre dans l'étape (b) du procédé selon l'invention peut être constitué, par exemple, d'une solution aqueuse d'un acide, de préférence d'acide chlorhydrique. Le cas échéant, le rapport molaire entre l'acide et le cocatalyseur contenu dans le mélange est, de préférence, d'au moins 1. Généralement, le rapport molaire est d'au plus 3, de préférence d'au plus 2. Dans la méthode et le procédé selon l'invention, le cocatalyseur est généralement au moins partiellement miscible avec la phase aqueuse.

Dans la méthode et le procédé selon l'invention, le cocatalyseur présente souvent un point d'ébullition à pression atmosphérique de moins de 100°C. Plus souvent le point d'ébullition est d'au plus 90°C. De préférence, le point d'ébullition est d'au plus 85°C. Généralement le cocatalyseur présente souvent un point d'ébullition à pression atmosphérique d'au moins 20°C. Plus souvent le point d'ébullition est d'au moins 30°C. De préférence, le point d'ébullition est d'au moins 35°C.

La méthode selon l'invention s'applique à la récupération des cocatalyseurs organiques comprenant au moins un hétéroatome sélectionné parmi le groupe constitué de N, P et S. Des exemples de tels cocatalyseurs sont, parmi autres, des amines, de préférence primaires, des alcools, des 1,3-dicétones, des phosphines, des oxydes de phosphine et des thiols.

Parmi les oxydes de phosphine, on peut citer notamment les oxydes de trialkuylphosphine de formule (R1R2R3)PO, dans laquelle R1, R2 et R3 représentent des groupements alkyles en C3-C10, identiques ou différents, de préférence linéaires. On retient en particulier l'oxyde de tri-(n-butyl)phosphine, l'oxyde de tri-(n-hexyl)phosphine et leurs mélanges.

La méthode et le procédé selon l'invention conviennent particulièrement bien lorsque le cocatalyseur est une amine. Parmi les amines, on peut citer les amines aliphatiques ou les amines aromatiques. Parmi les amines aliphatiques, on trouve les amines primaires, les amines secondaires et les amines tertiaires. D'une façon générale, on l'amine est choisie parmi les alcanolamines, les alkylamines, comme par exemple l'éthanolamine, la n-butylamine, la tert-butylamine, la n-propylamine, l'isopropylamine, la benzylamine, l'hexaméthylène diamine, la diéthylamine, la triéthylamine ou des amines aromatiques comme la pyridine ou l'aniline. La méthode et le procédé selon l'invention conviennent en particulier quand le cocatalyseur est la t.butylamine.

Généralement, la phase aqueuse contient également du catalyseur.

La méthode et le procédé selon l'invention s'appliquent de manière avantageuse lorsque le catalyseur contient au moins un métal capable de former un précipité insoluble dans l'eau lorsqu'il est mis en contact avec une base dans une phase aqueuse. Typiquement, le catalyseur contient un métal de transition. Le métal de transition peut être sélectionné, par exemple, dans le groupe constitué de Cr, Ni, Fe, Mn, Co, Mo, Pd, Pt, Ag et Cu. La méthode et le procédé selon l'invention s'appliquent de manière particulièrement avantageuse lorsque le catalyseur comprend un composé de cuivre tel que, par exemple, le chlorure de cuivre (I), le CuCl₂ anhydre ou dihydraté, ou l'acétylacétonate de cuivre(II).

Il est apparu que lorsque le catalyseur contient du métal, la méthode et le procédé selon l'invention permettent d'obtenir un composé de métal sous une forme solide, approprié à la mise à la décharge ou éventuellement au recyclage du métal et une phase aqueuse avec une teneur fortement réduite en métal, ladite phase pouvant alors être rejetée facilement vers l'environnement.

La méthode selon l'invention peut être mise en oeuvre pour récupérer un cocatalyseur d'un mélange réactionnel issu de toute réaction de préparation de composé organique en présence d'un catalyseur et d'un cocatalyseur. Toutefois, elle convient particulièrement bien pour récupérer un cocatalyseur d'un mélange réactionnel issu d'une réaction de préparation d'un hydrocarbure halogéné comprenant au moins trois atomes de carbone, en présence d'un catalyseur comprenant, de préférence, un composé de cuivre et d'un cocatalyseur comprenant, de préférence, une amine.

Le procédé de préparation d'un composé organique selon l'invention est avantageusement un procédé de préparation d'un hydrocarbure halogéné comprenant au moins trois atomes de carbone, par télomérisation entre une oléfine et un haloalcane, en présence d'un catalyseur comprenant de préférence un composé de cuivre et d'un cocatalyseur comprenant de préférence une amine. De manière particulièrement avantageuse, il s'agit d'un procédé de préparation de 1,1,1,3,3-pentachloropropane ou de 1,1,1,3,3-pentachlorobutane, en présence d'un composé de cuivre comme catalyseur et d'une amine comme cocatalyseur..

L'invention concerne également la réutilisation du cocatalyseur récupéré par la méthode selon l'invention dans un procédé de fabrication de composé organique dans lequel on effectue une étape de réaction de fabrication de composé organique en présence d'un catalyseur et d'un cocatalyseur.

Les exemples ci-après entendent illustrer l'invention sans toutefois la limiter.

### Exemple 1

On a effectué une réaction de fabrication de 1,1,1,3,3-pentachlorobutane par réaction de 2-chloropropène avec du tétrachlorométhane en présence de CuCl₂.2H₂O à titre de catalyseur et de t.butylamine à titre de cocatalyseur. On a soumis le mélange réactionnel issu de cette réaction à un lavage avec une solution aqueuse d'HCl contenant 1,112 mole d'HCl par kg, à raison de 0,35 kg de solution aqueuse d'HCl par kg de mélange réactionnel. Après décantation, on a récupéré une phase organique, constituée essentiellement de 1,1,1,3,3-pentachlorobutane et de réactifs non consommés, présentant une teneur en cuivre de 0,03 mg/kg et une teneur en azote correspondant à une teneur en t.butylamine de 1,34 mmol/kg et une phase aqueuse contenant 644 mg Cu/kg et présentant une teneur en azote correspondant à une teneur en t.butylamine de 694 mmol/kg. Une fraction de la phase aqueuse récupérée a été chauffée à l'ébullition dans un appareillage de distillation, tout en amenant le pH à une valeur de 10,5 par addition à la phase aqueuse en ébullition d'une solution aqueuse présentant une teneur en NaOH de 50% en poids. On a récupéré par distillation l'équivalent de 96,2 % de la t.butylamine mise en oeuvre lors de la synthèse du 1,1,1,3,3-pentachlorobutane, présentant une pureté de 997,6 g t.butylamine/kg. L'eau récupérée après filtration ne contenait plus que 3,8 mg/kg de Cu et présentant une teneur en azote correspondant à une teneur en t.butylamine de 2,9 mmol/kg.

### Exemple 2

On a effectué une réaction de fabrication de 1,1,1,3,3-pentachlorobutane par réaction de 2-chloropropène avec du tétrachlorométhane. On a mis en oeuvre du CuCl₂ à titre de catalyseur et de la t.butylamine récupérée dans l'exemple 1 à titre de cocatalyseur. On a effectué pendant 4h une addition en continu d'un mélange de 2-chloropropène/tétrachlorométhane et de t.butylamine Le rapport molaire global 2-chloropropène/ tétrachlorométhane /CuCl2/t.butylamine a été de 1/2/0.001/0.06. Après 8h total de réaction à 80°C la sélectivité en 1,1,1,3,3-pentachlorobutane a été de 95,7% et la conversion de 2-chloropropène a été de 97%.

### Exemple 3 (comparatif)

L'exemple 2 a été répété en utilisant de la t.butylamine commercialement disponible (fournie par ACROS) à titre de cocatalyseur. La sélectivité en 1,1,1,3,3-pentachlorobutane a été de 94,8 % et la conversion de 2-chloropropène a été de 88 %.

## Revendications

1. Méthode pour la récupération d'un cocatalyseur organique comprenant au moins un hétéroatome sélectionné parmi le groupe constitué de N, P et S d'une phase aqueuse contenant au moins du cocatalyseur, comprenant
(a) une étape de traitement de la phase aqueuse avec au moins une base;
(b) une étape de séparation du cocatalyseur dans laquelle on isole le cocatalyseur de la phase aqueuse traitée avec la base par entraînement à la vapeur ou par distillation.

2. Méthode selon la revendication 1 dans laquelle la phase aqueuse contenant au moins du cocatalyseur, est obtenue par mise en contact d'un mélange réactionnel issu d'une réaction de préparation de composés organiques en présence d'un catalyseur et du cocatalyseur à récupérer, avec un milieu aqueux constitué d'une solution aqueuse d'un acide.

3. Méthode selon la revendication 1 ou 2 dans laquelle on effectue l'étape (a) de traitement basique à une température de 30 à 100 °C.

4. Méthode selon l'une quelconque des revendications 1 à 3 dans laquelle on effectue l'étape de traitement basique et l'étape de séparation du cocatalyseur au moins partiellement simultanément.

5. Méthode selon l'une quelconque des revendications 1 à 4, appliquée à la récupération d'un cocatalyseur organique comprenant une amine.

6. Procédé de préparation d'un composé organique comprenant au moins
(a) une étape de synthèse du composé organique, dans laquelle on fait réagir des réactifs dans un milieu réactionnel contenant un catalyseur et un cocatalyseur organique comprenant au moins un hétéroatome sélectionné parmi le groupe constitué de N, P et S;
(b) une étape de lavage du mélange réactionnel issu de l'étape (a), dans laquelle on met en contact ledit mélange réactionnel avec un milieu aqueux et on sépare les phases organique et aqueuse obtenues;
(c) une étape de traitement de la phase aqueuse avec au moins une base; et
(d) une étape de séparation du cocatalyseur selon la revendication 1 dans laquelle on isole le cocatalyseur de la phase aqueuse traitée avec la base par entraînement à la vapeur ou par distillation.

7. Procédé selon la revendication 6 dans lequel on recycle au moins partiellement le cocatalyseur récupéré dans l'étape (d) à l'étape (a) de synthèse.

8. Procédé selon la revendication 6 ou 7, dans lequel le catalyseur contient au moins un métal capable de former un précipité insoluble dans l'eau lorsqu'il est mis en contact avec une base dans une phase aqueuse.

9. Procédé selon l'une quelconque des revendications de 6 à 8, dans lequel le catalyseur contient un métal de transition choisi de préférence parmi Cr, Ni, Fe, Mn, Co, Mo, Pd, Pt, Ag et Cu.

10. Procédé selon l'une quelconque des revendications 6 à 9, dans lequel le composé organique préparé est un hydrocarbure halogéné comprenant au moins trois atomes de carbone, dans lequel le catalyseur comprend, de préférence, un composé de cuivre et le cocatalyseur comprend, de préférence, une amine.

11. Procédé selon l'une quelconque des revendications 8 à 10, dans lequel on récupère d'une part un composé de métal sous une forme solide, appropriée à la mise à la décharge ou éventuellement au recyclage du métal et d'autre part une phase aqueuse avec une teneur réduite en métal.

12. Procédé selon l'une quelconque des revendications 6 à 11, dans lequel le composé organique préparé est du 1,1,1,3,3-pentachlorobutane ou du 1,1,1,3,3-pentachloropropane.

## Claims

1. Method for recovering an organic co-catalyst comprising at least one hetero atom selected from the group consisting of N, O, P and S from an aqueous phase containing at least the co-catalyst, comprising
(a) a step of treating the aqueous phase with at least one base;
(b) a step of separating out the co-catalyst, in which the co-catalyst is isolated from the aqueous phase treated with the base by vapour entrainment or distillation.

2. Method according to Claim 1, in which the aqueous phase containing at least the co-catalyst is obtained by placing a reaction mixture, obtained from a reaction for the preparation of organic compounds in the presence of a catalyst and the co-catalyst to be recovered, in contact with an aqueous medium consisting of an aqueous solution of an acid.

3. Method according to Claim 1 or 2, in which step (a) of basic treatment is carried out at a temperature of from 30°C to 100°C.

4. Method according to any one of Claims 1 to 3, in which the basic treatment step and the co-catalyst separation step are carried out at least partially simultaneously.

5. Method according to any one of Claims 1 to 4, applied to the recovery of an organic co-catalyst comprising an amine.

6. Process for preparing an organic compound, comprising at least
(a) one step of synthesizing the organic compound, in which reagents are reacted in a reaction medium containing a catalyst and an organic co-catalyst comprising at least one hetero atom selected from the group consisting of N, O, P and S;
(b) one step of washing the reaction mixture obtained from step (a) in which the said reaction mixture is placed in contact with an aqueous medium and the organic and aqueous phases obtained are separated;
(c) one step of treating the aqueous phase with at least one base; and
(d) one step of separating out the co-catalyst according to Claim 1, in which the co-catalyst is isolated from the aqueous phase treated with the base.

7. Process according to Claim 6, in which the co-catalyst recovered in step (d) is at least partially recycled into the synthesis step (a).

8. Process according to Claim 6 or 7, in which the organic compound prepared is a halohydrocarbon containing at least three carbon atoms, in which the catalyst preferably comprises a copper compound and the co-catalyst preferably comprises an amine.

9. Process according to anyone of Claims 6 to 8, wherein the catalyst contains a transition metal preferably chosen from Cr, Ni, Fe, Mn, Co, Mo, Pd, Pt, Ag and Cu.

10. Process according to anyone of Claims 6 to 9 wherein the organic compound prepared is a halogenated hydrocarbon comprising at least three carbon atoms and wherein the catalyst comprises, preferably, a copper compound and the co-catalyst comprises, preferably, an amine.

11. Process according to anyone of Claims 8 to 10, wherein on the one hand a metal compound is recovered in solid from adequate for disposal or optional recycling of the metal and on the other hand an aqueous phase with a reduced metal content is recovered.

12. Process according to any one of Claims 6 to 11, in which the organic compound prepared is 1,1,1,3,3-pentachlorobutane or 1,1,1,3,3-pentachloropropane.

## Patentansprüche

1. Verfahren zur Rückgewinnung eines organischen Cokatalysators, der mindestens ein Heteroatom aus der Gruppe bestehend aus N, P und S enthält, aus einer mindestens Cokatalysator enthaltenden wäßrigen Phase, bei dem man
(a) die wäßrige Phase mit mindestens einer Base behandelt;
(b) den Cokatalysator abtrennt, wobei man den Cokatalysator durch Wasserdampfdestillation oder Destillation aus der mit der Base behandelten wäßrigen Phase isoliert.

2. Verfahren nach Anspruch 1, bei dem die wäßrige Phase, die mindestens Cokatalysator enthält, durch Inkonkaktbringen einer aus einer Reaktion zur Herstellung von organischen Verbindungen in Gegenwart von einem Katalysator und zurückzugewinnendem Cokatalysator hervorgegangenen Reaktionsmischung mit einer wäßrigen Lösung einer Säure erhalten wird.

3. Verfahren nach Anspruch 1 oder 2, bei dem man den Basenbehandlungsschritt (a) bei einer Temperatur von 30 bis 100°C durchführt.

4. Verfahren nach einem der Ansprüche 1 bis 3, bei dem man den Basenbehandlungsschritt und den Cokatalysatorabtrennungsschritt zumindest zum Teil gleichzeitig durchführt.

5. Verfahren nach einem der Ansprüche 1 bis 4, angewandt auf die Rückgewinnung eines organischen Cokatalysators, der ein Amin umfaßt.

6. Verfahren zur Herstellung einer organischen Verbindung, bei dem man mindestens
(a) die organische Verbindung synthetisiert, wobei man die Reaktanten in einem einen Katalysator und einen organischen Cokatalysator, der mindestens ein Heteroatom aus der Gruppe bestehend aus N, P und S enthält, enthaltenden Reaktionsmedium umsetzt;
(b) die Reaktionsmischung aus Schritt (a) wäscht, wobei man die Reaktionsmischung mit einem wäßrigen Medium in Kontakt bringt und die erhaltene organische und wäßrige Phase trennt;
(c) die wäßrige Phase mit mindestens einer Base behandelt und
(d) den Cokatalysator gemäß Anspruch 1 abtrennt, wobei man den Cokatalysator durch Wasserdampfdestillation oder Destillation aus der mit der Base behandelten wäßrigen Phase isoliert.

7. Verfahren nach Anspruch 6, bei dem man den in Schritt (d) zurückgewonnenen Cokatalysator zumindest zum Teil in den Syntheseschritt (a) zurückführt.

8. Verfahren nach Anspruch 6 oder 7, bei dem der Katalysator mindestens ein Metall, das beim Inkontaktbringen mit einer Base in einer wäßrigen Phase zur Bildung eines unlöslichen Niederschlags in Wasser befähigt ist, enthält.

9. Verfahren nach einem der Ansprüche 6 bis 8, bei dem der Katalysator ein vorzugsweise unter Cr, Ni, Fe, Mn, Co, Mo, Pd, Pt, Ag und Cu ausgewähltes Übergangsmetall enthält.

10. Verfahren nach einem der Ansprüche 6 bis 9, bei dem es sich bei der hergestellten organischen Verbindung um einen Halogenkohlenwasserstoff mit mindestens drei Kohlenstoffatomen handelt, wobei der Katalysator vorzugsweise eine Kupferverbindung umfaßt und der Cokatalysator vorzugsweise ein Amin umfaßt.

11. Verfahren nach einem der Ansprüche 8 bis 10, bei dem man einerseits eine Metallverbindung in einer festen Form, die zur Austragung oder gegebenenfalls zur Rückführung des Metalls geeignet ist, und andererseits eine wäßrige Phase mit verringertem Metallgehalt zurückgewinnt.

12. Verfahren nach einem der Ansprüche 6 bis 11, bei dem es sich bei der hergestellten organischen Verbindung um 1,1,1,3,3-Pentachlorbutan oder 1,1,1,3,3-Pentachlorpropan handelt.
